# EUROPEAN PATENT APPLICATION

(11) **EP 2 056 262 A2**
(43) Date of publication of application: **06.05.2009**
(21) Application number: 08167807.0
(22) Date of filing: 29.10.2008
(51) Int. Cl.: G07F 7/08

(54) **Administration system for personnel benefits**

(30) Priority: 29.10.2007 FI 20070817
(71) Applicant: Kallioniemi, Antti, 13100 Hämeenlinna (FI); Kaltiokumpu, Marko, 14200 Turenki (FI)
(72) Inventor: Kallioniemi, Antti, 13100 Hämeenlinna (FI); Kaltiokumpu, Marko, 14200 Turenki (FI)
(74) Representative: Järveläinen, Pertti Tauno Juhani

(57) **Abstract**

Use of a programmable chip card, or a programmable mobile terminal provided with similar properties, for paying for and administering non-recurring personnel benefit services and/or personnel benefit products, wherein the services and/or products are paid for with a means of payment, and in which the services and/or products paid for with the means of payment are processed by means of an information system, and in which a programmable chip card (SCARD1 - SCARDn) provided with a memory, or a programmable mobile terminal provided with similar properties, in which the data of the user is recorded, is used as the means of payment, in which the services and/or products are paid for by means of a payment terminal, in which each service or product is recorded such that the payment terminal sends to the chip card or to the mobile terminal a data record, which is a description of the service or product paid for.

## Description

### FIELD OF THE INVENTION

The present invention relates to a method and a system for paying for and administering personnel benefits. More particularly, the object of the invention is a method and a system for paying for and administering non-recurring personnel benefit services.

### DESRIPTION OF PRIOR ART

A luncheon voucher is a personnel benefit offered by companies or similar organizations, with which an employee can buy food to the value of a certain sum of money in a lunch restaurant. A luncheon voucher can be given as a fringe benefit. This type of fringe benefit is taxable earned income, which is treated as salary in connection with pay-as-you-earn taxation and in payroll accounting. The taxable value is added to the salary and tax according to the tax rate is paid on it.

A company distributes luncheon vouchers to its personnel, who pay with them in a lunch restaurant. The lunch restaurant sends the used vouchers to the luncheon voucher company that administers the luncheon vouchers, which then pays the money to the lunch restaurant.

Luncheon vouchers are in use in European countries, including in England, France, Switzerland, Sweden and Finland.

The luncheon vouchers are handled manually, e.g. the handling of them in restaurant premises takes place manually. This is laborious and time-consuming.

Similar personnel benefit vouchers are physical exercise vouchers and culture vouchers. Employees can purchase physical exercise services with physical exercise vouchers. For example, indoor swimming pool services, exercise gym services and indoor racket game services, as well as coached group exercise services, can be paid for with physical exercise vouchers. A physical exercise voucher is a personnel benefit, which is individualized for the personal use of its recipient. Culture vouchers can be used in a similar way, which vouchers can be used to purchase non-recurring cultural services, such as concerts, etc. The same drawbacks are also attached to their use as those attached to the handling of luncheon vouchers

### SUMMARY OF THE INVENTION

The purpose of this invention is to eliminate the drawbacks of prior art and to achieve a method and a system for paying for and administering non-recurring personnel benefit services that is appreciably better than known solutions.

This invention is based on the use of a programmable chip card, a so-called GO-iN chip, in a way in which, of the benefit services paid for with the card, such as lunches, exercise services, cultural services, data from the payment terminal describing the service used are recorded in the memory of the chip. The recorded data is downloaded from a PC home computer to the GO-iN service system and the application in it intended for analyzing the usage history, in which the data about benefit services are processed specifically for the card for the personal feedback of the cardholder.

Each service in the invention, such as a lunch or an exercise service, is recorded in the chip card such that the payment terminal at the service provider, e.g. a restaurant, sends a record to the card of what has been purchased. Payment for services is made to the service providers by means of trusted chip cards or mobile terminals. The payment terminal comprises a data record of each service or product paid for and writes it to the chip for later analysis.

In the invention the data recorded in the chip card is emptied and transmitted via a telecommunications connection to the server that administers the system, e.g. in the evening of the records for that day, by means of the home computer of the user and a card reader and user interface connected to it.

In a preferred embodiment the customer chip card has a so-called billing limit per set monitoring period.

In another preferred embodiment a number of different personnel benefits can be combined in the chip card.

The characteristic features of the method, the system and the chip card according to the invention are described in detail in the independent claims and the preferred embodiments in the other claims.

Thus instead of a chip card a similar mobile terminal (mobile phone, communicator, etc.) provided with programming and memory properties can also be used in the system for paying for the services in question, in which case a chip card is not needed.

With the solution according to the invention payment for and the administration of personnel benefits can be automated, in which case a system for the payment and administration of personnel benefits that is substantially more effective and more secure than prior-art solutions is achieved. Additionally, with one chip card it is possible to render payment for a number of different personnel benefits.

### SHORT DESCRIPTION OF THE DRAWINGS

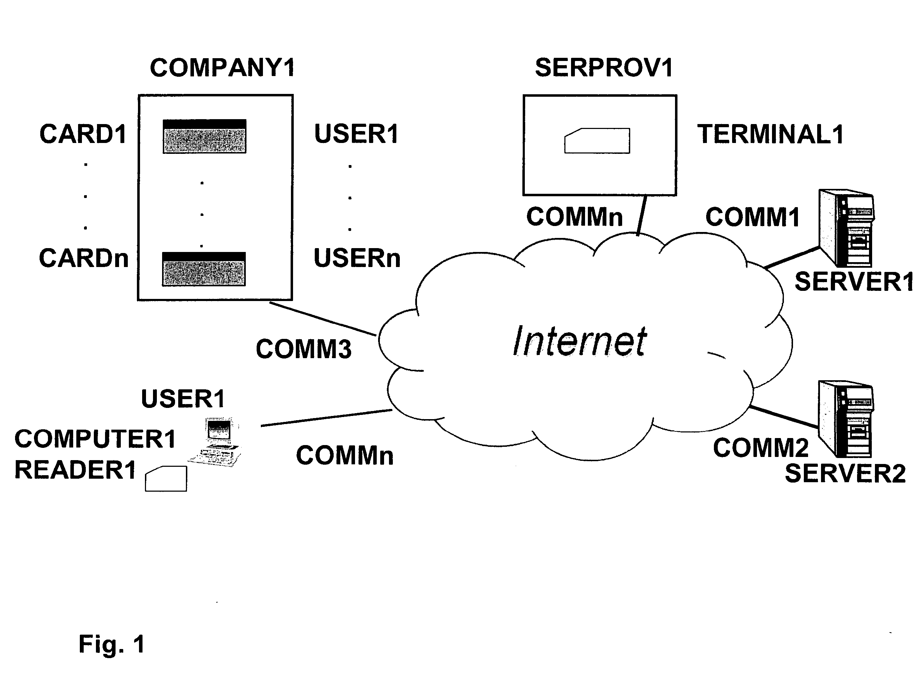

In the following, the invention will be described in more detail by the aid of some embodiments with reference to the attached drawings, wherein
- Fig. 1: presents a flow chart of the system according to the invention.
- Fig. 2: presents the operation of the system according to the invention as a flow chart.

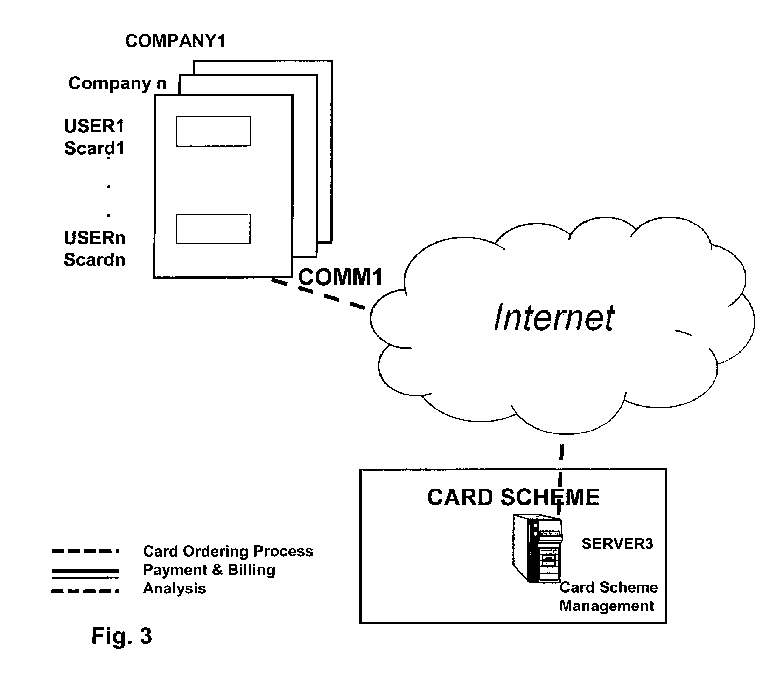

- Fig. 3: presents a channel for ordering cards of the system according to the invention.

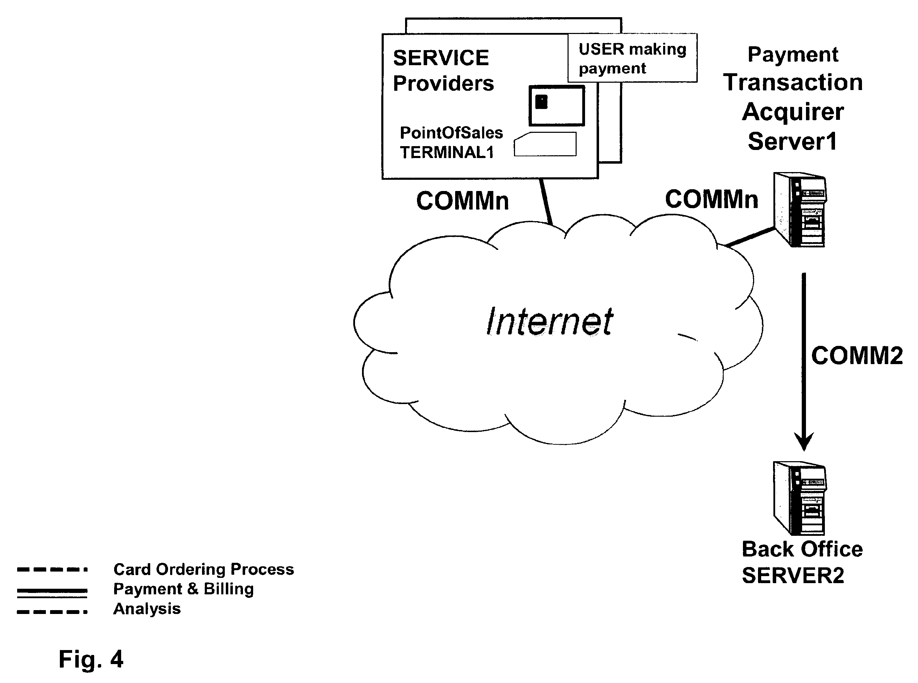

- Fig. 4: presents the operation of the system according to the invention at the time of paying for a benefit service.

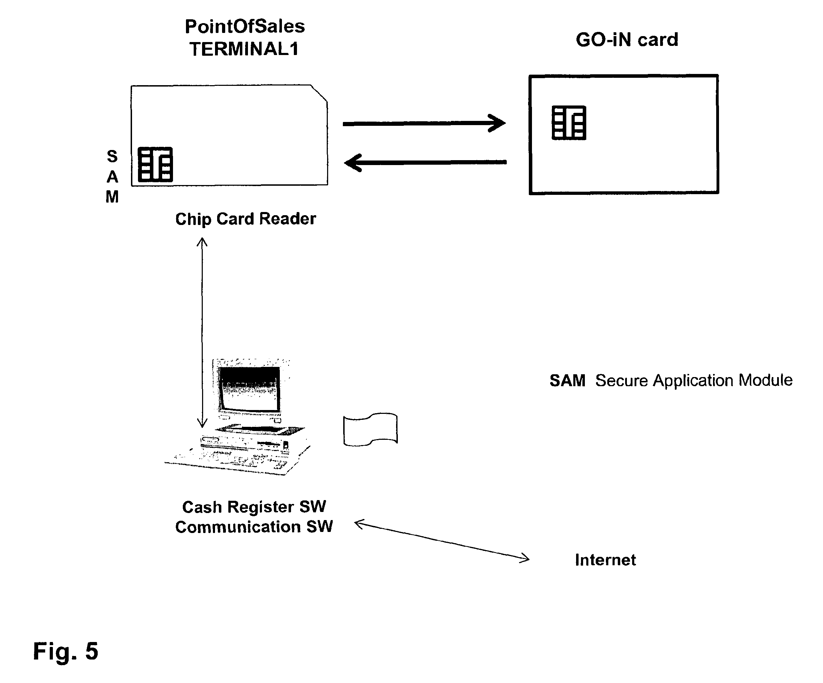

- Fig. 5: presents the data connections operating in the system according to the invention at the time of payment.

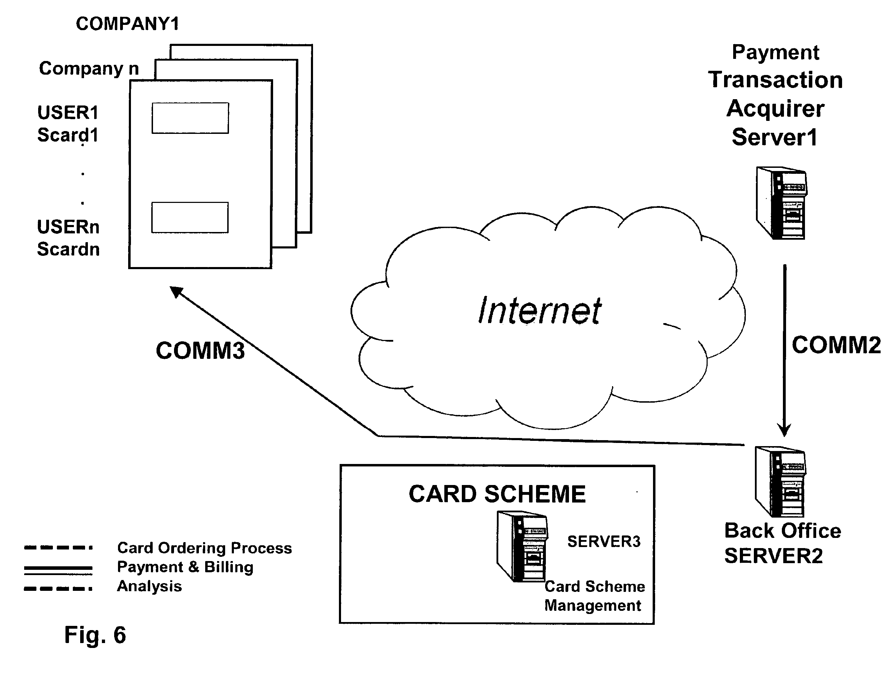

- Fig. 6: presents the billing phase and the payment phase of payment transactions for benefit services made in the system according to the invention.
- Fig. 7: presents the passage of data in one system of the operating environment.

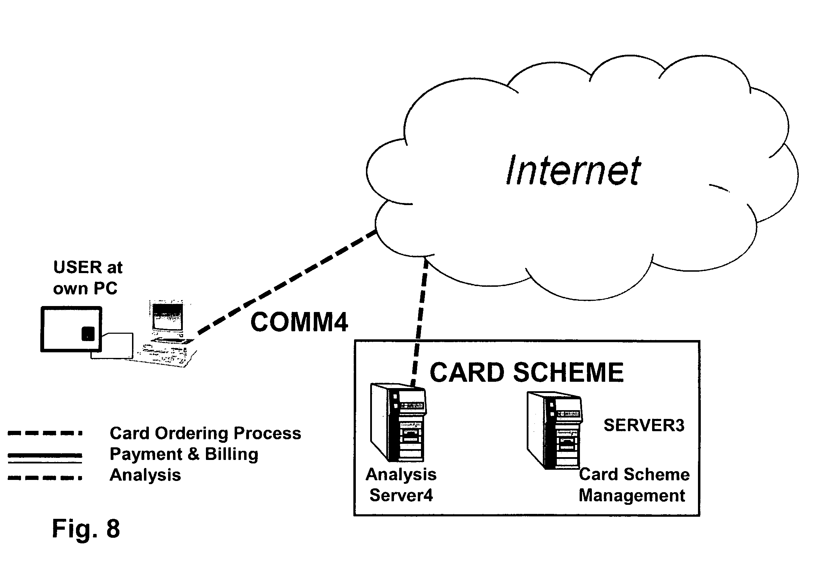

- Fig. 8: presents the operation of the system according to the invention in the phase of analyzing the transaction descriptions that have accumulated in the chip.

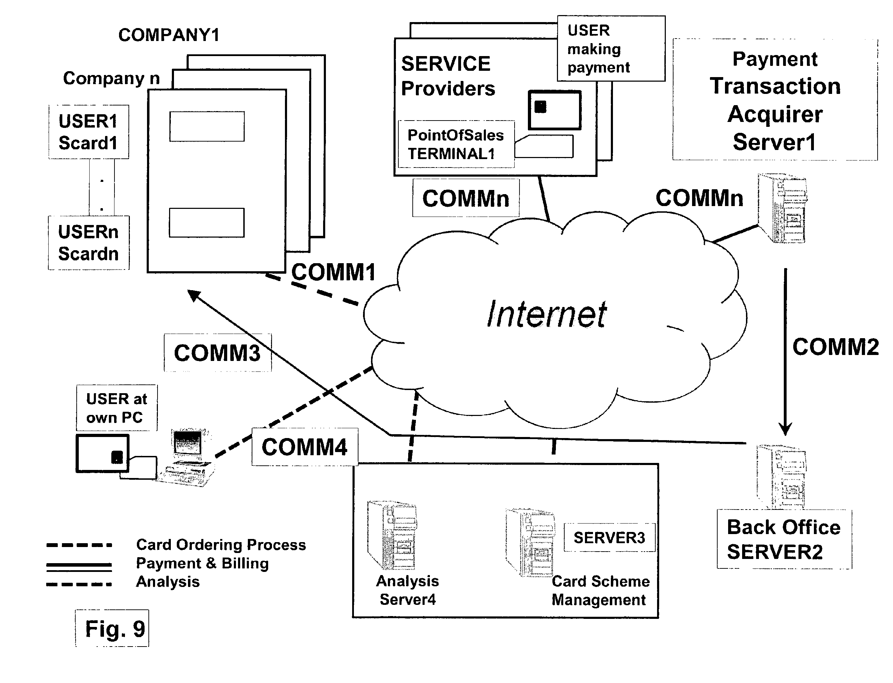

- Fig. 9: presents an overall view of the system according to the invention as a flow chart.

### DESCRIPTION OF PREFERRED EMBODIMENTS

### General description of the system

The payment and administration system of personnel benefit services based on the programmable chip cards SCARD1 - SCARDn according to the invention comprises a database server SERVER1 of the agent company, which server administers the normal data communications of payment transactions.

The database server is connected with the telecommunications connections COMMn, (e.g. via the Internet) to each payment terminal TERMINAL1 - TERMINALn that is connected to the SERVPROV1 - SERVPROVn checkout system of the service provider (lunch restaurant, fitness gym, concert hall, etc.) as well as to the other servers described below. The connection can be secured.

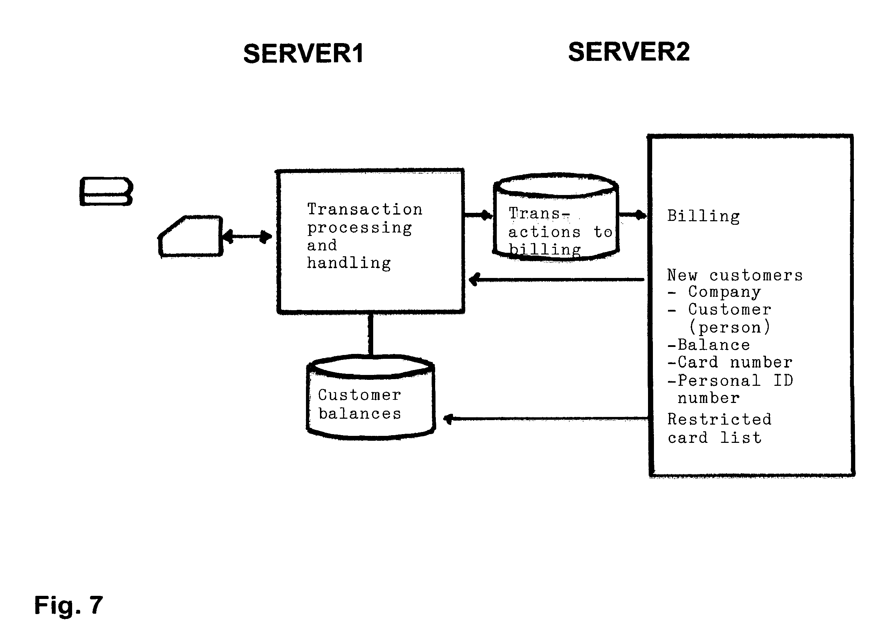

The database server SERVER1 maintains the databases of the information system, in other words the data and customer accounts of e.g. the client companies COMPANY1 - COMPANYn and their personnel (cardholders, i.e. the users USER1 - USERn), processes payment transaction files and sends them to another database server SERVER2, which forms billing data and payment data (see Fig. 7).

The system also comprises the server SERVER3, which handles the customer register and the card register, as well as the server SERVER4 (the so-called GO-iN_Analysis server).

### Chip card

The chip card SCARD1 - SCARDn comprises a chip provided with a microprocessor, which chip comprises a memory that is divided into a number of memory areas, namely into permanently programmed ROM memory, nonvolatile re-writable EEPROM memory, and volatile re-writable memory RAM. Alternatively the ROM memory and the EEPROM memory can be implemented as flash memory.

An operating system can be stored on the chip card, which is typically stored in the ROM memory. In addition to that, an application program or application programs can be stored in it, which can be implemented by programming e.g. with an object-oriented programming language such as JAVA, using a version specifically suited to chip card applications, e.g. so-called Java Card technology, in which Java technology modified according to the specifications can be used, which contains limited system resources and which is thus suited to the applications in question.

In this invention the Java application to be installed on the chip of the card is an application related to and/or programmed for paying for and administering personnel benefits, which functions in the manner presented below, and in which it is possible to record in the chip card all the data of the user connected to one or more personnel benefit systems, such as in the case of a physical exercise benefit card the information about the card and the user (card number, name of the user, identifiers of the client company) as well as balance data (e.g. how much value/use remains available).

The memory capacity of the chip is dimensioned such that the transaction data typically accumulating over a four-week period fits into the memory. It can be emptied, e.g. also each evening of the records for that day, by means of the home computer of the user and a card reader connected to it.

### Operation of the system

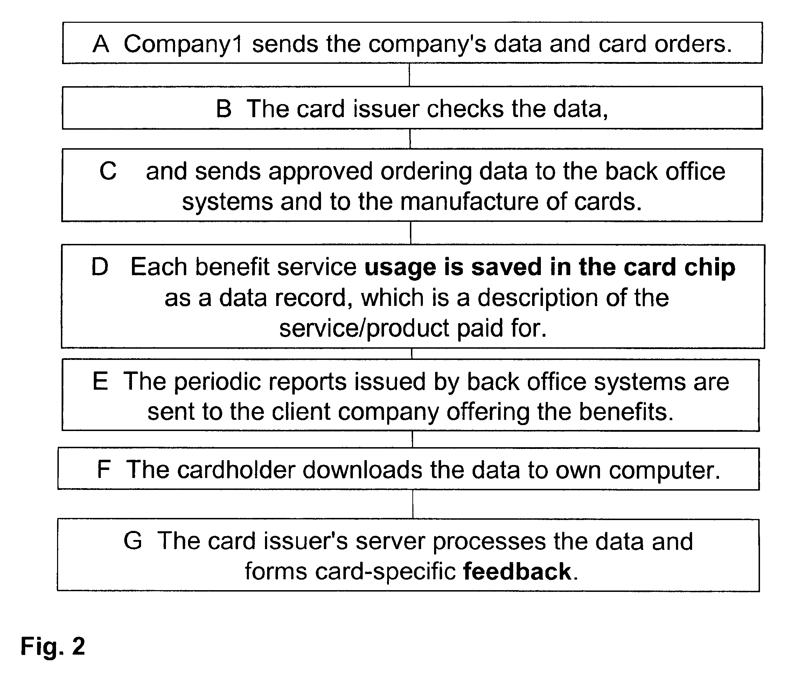

The system according to Fig. 2 operates with respect to its main features as follows:
A Company1 sends the company's data and card orders.
B The card issuer checks the data and maintains the databases of the card scheme,
C and sends approved ordering data to the back office systems for transactions and to the manufacturing of cards.
D Each usage of a benefit service is recorded in the chip of the card
E The periodic reports issued by back office systems are sent to the client companies and service providers offering the benefits.
F The cardholder downloads the data with his/her own computer.
G The server for the analysis service of the card issuer processes the data and forms card-specific feedback.

Thus at first the client company sends information about COMPANY1 to the administration company of the scheme and about the users of fringe benefits in it, e.g. with an electronic questionnaire form specified by the administration company, which can be e.g. an ordering file (phase A) that is sent with a telecommunications connection.

After that the administration company checks the data of the client company and records the data in the database of the server SERVER3 (phase B).

After that the administration company sends the relevant ordering instance information about the client company and about changes in the card stock to payments managers and about new cards to the card manufacturer (phase C). The manufactured cards are posted to the addresses notified in the orders.

After that the user can start using his/her chip card in the payment terminals of the service providers that have made a GO-iN agreement by paying for the service he/she buys at each time of use with the chip card, which then reduces the balance of available funds on the chip card, and which simultaneously records all the necessary data related to the relevant service and to its use (name of service, price, time, place, etc.) in the chip card (phase D). A transaction is created from the payment, in which a description of the product or service paid for is written to the chip. These data that have accumulated on the chip can be analyzed in retrospect with a personal PC, which is in connection with the GO-iN_Analysis server.

Thus, each service in the invention, such as a lunch or an exercise service, is recorded in the chip card such that the payment terminal each time sends to the card a record of what has been purchased (an itemized lunch and its price, the type and price of an exercise service, etc.). If data about more than one type of service is recorded in the chip, a description of the product or service paid for is written to the chip for each different service.

If so desired, e.g. at the end of the day, the user can download the data of the card at home by means of a simple card reader READER1 and a home computer COMPUTER1 and also the software and user interface in it, and send the data along an encrypted telecommunications connection to SERVER4 (phase F).

The server SERVER4 processes the information it receives, updates the databases and maintains the feedback system (phase G).

The connection COMM1/SERVER3 is a connection for ordering cards, in which SERVER3 manages the card scheme.

COMMn/Server1 is the time of payment and at that time the recording of the data to the chip occurs in TERMINAL1.

COMM2 from Server1 to SERVER2 is the data transfer of the back office system.

COMM3 from SERVER2 to COMPANYn is the sending of a billing file to employers.

COMM4 is a connection taken to the analysis of the data of the chip. The Go-iN Analysis runs in Server4.

It is obvious to the person skilled in the art that the different embodiments of the invention are not limited solely to the embodiment described above, but that they may be varied within the scope of the claims presented below. The chip card can be updated with respect to software by means of any payment terminal whatsoever that uses the card in question. Instead of a chip card a mobile terminal provided with similar programming and memory properties can also be used in the system for paying for the services in question. In the system, telecommunications relating to a payment takes place only after the payment run of the back office system, e.g. on the same evening.

## Claims

1. Method for paying for and administering non-recurring personnel benefit services and/or personnel benefit products, wherein the products/services are paid for with a means of payment, and wherein the services paid for with the means of payment are processed by means of an information system,
**characterized in that** in the method:
- a programmable chip card (SCARD1 - SCARDn) provided with a memory, or a programmable mobile terminal provided with similar properties, in which the data of the user is recorded, is used as the means of payment,
- in which the services and/or products are paid for to the service providers by means of trusted chip cards and/or mobile terminals and payment terminals,
- in which the payment terminal forms a data record of each service or product paid for and writes it to the chip for later analysis, and
- in which the data of the chip card or of the mobile terminal is downloaded for analysis at set intervals by means of telecommunications connections to the information system.

2. Method according to claim 1, **characterized in that** a chip card is used in a way in which, of the benefit services paid for with the card, such as lunches, exercise services, cultural services, data from the payment terminal describing the service used are recorded in the memory of the chip, and in which the recorded data is downloaded by means of a computer and its interface to a system in which the data of the benefit services are processed specifically for the card for the personal feedback of the cardholder.

3. Method according to claim 1 or 2, **characterized in that** a billing limit per monitoring period is arranged in the chip card or in the mobile terminal.

4. Method according to claim 1 or 2 or 3, **characterized in that** information concerning different personnel benefits is stored in the chip card or in the mobile terminal.

5. Method according to any of the preceding claims, **characterized in that** the data of the chip card or of the mobile terminal is downloaded if desired after a certain interval of time to an information system by means of a secured telecommunications connection.

6. System for paying for and administering non-recurring personnel benefit services and/or personnel benefit products, wherein the products/services are paid for with a means of payment, and which comprises an information system, in which the services paid for with the means of payment are arranged to be processed by means of the information system comprising servers (SERVER1 - SERVER4),
**characterized in that** the system comprises:
- chip cards, in which case a programmable chip card (SCARD1 - SCARDn) provided with a memory or a programmable mobile terminal provided with similar properties is used as the means of payment, in which the data of the user is recorded,
- payment terminals, by means of which services and/or products are paid for by means of the payment terminal of the service provider for the chip cards or mobile terminals,
- which system is fitted such that each service or product is recorded so that the payment terminal sends to the chip card or to the mobile terminal a data record, which is a description of the service or product paid for, and
- which comprises an analysis server (SERVER4), in which case the data accumulated on the card can be analyzed in retrospect with a computer, more particularly with a personal computer, that is in connection with the analysis server, i.e. the so-called GO-iN_Analysis.

7. System according to claim 6, **characterized in that** the system further comprises:
a card ordering server connection (COMM1/SERVER3), comprising a connection for ordering cards and an ordering server, wherein the ordering server (SERVER3) is arranged to manage the card scheme,
a payment transaction acquirer server (COMMn/Server1), in which is recorded the time of payment and at that time recording of the data onto the chip is arranged to occur in the terminal (TERMINAL1),
a server-telecommunications arrangement of the back office system, in which is a connection (COMM2) between servers, from Server1 to SERVER2, for the data transfer of the back office system.
and a billing connection COMM3 from SERVER2 to COMPANYn is for sending a billing file, and
a connection (COMM4) for the connection to be taken to the analysis of the data of the chip.

8. System according to claim 6 or 7 **characterized in that** information concerning different personnel benefits is stored in the chip card or in the mobile terminal.

9. System according to any of claims 5 - 8, **characterized in that** the payment and administration system of personnel benefit services comprises a database server, which administers use of the chip cards, and which is connected with a telecommunications connection to the payment terminal of each service provider.

10. System according to any of claims 5 - 9, **characterized in that** the data can be downloaded by means of a computer and also software, a card reader and a user interface connected to it, and the data can be transmitted along a telecommunications connection to the server that administers the system.

11. **Use** of a programmable chip card, or a programmable mobile terminal provided with similar properties, for paying for and administering non-recurring personnel benefit services and/or personnel benefit products, wherein the services and/or products are paid for with a means of payment, and in which the services and/or products paid for with the means of payment are processed by means of an information system, and in which a programmable chip card (SCARD1 - SCARDn) provided with a memory, or a programmable mobile terminal provided with similar properties, in which the data of the user is recorded, is used as the means of payment, in which the services and/or products are paid for by means of a payment terminal, in which each service or product is recorded such that the payment terminal sends to the chip card or to the mobile terminal a data record, which is a description of the service or product paid for.
